## Europäisches Patentamt
## European Patent Office
## Office européen des brevets

(11) Veröffentlichungsnummer: **0 185 780**
**B1**

(12) ## EUROPÄISCHE PATENTSCHRIFT

(45) Veröffentlichungstag der Patentschrift:
**01.03.89**

(21) Anmeldenummer: **84115669.8**

(22) Anmeldetag: **18.12.84**

(51) Int. Cl.⁴: **D 03 C  1/00, F 16 D  11/00**

(54) **Rotations-Schaftmaschine.**

(43) Veröffentlichungstag der Anmeldung:
**02.07.86 Patentblatt 86/27**

(45) Bekanntmachung des Hinweises auf die Patenterteilung:
**01.03.89 Patentblatt 89/9**

(84) Benannte Vertragsstaaten:
**CH DE FR GB IT LI**

(56) Entgegenhaltungen:
**EP-A- 0 056 098**
**EP-A- 0 129 123**
**BE-A- 652 343**
**DE-A- 2 909 131**
**DE-B- 2 036 643**
**DE-B- 2 938 451**
**DE-B- 3 001 310**
**FR-A- 1 305 638**

(73) Patentinhaber: **Stäubli AG (Stäubli SA) (Stäubli Ltd.),
Seestrasse 240, CH-8810 Horgen-Zürich (CH)**

(72) Erfinder: **Schwarz, Rudolf, Bergstrasse 37,
CH-8810 Horgen-Zürich (CH)**

(74) Vertreter: **Rossel, Albert, Dipl.-Ing. ETH, Postfach,
CH-8023 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Mitnahmekupplung einer rotationsangetriebenen Schaftmaschine gemäss Oberbegriff des Patentanspruches 1.

Derartige Rotations-Schaftmaschinen sind sowohl in der Literatur, als auch in der Praxis vielfältig bekannt geworden, insbesondere durch die DE-OS 29 09 131. Weitere Rotations-Schaftmaschinen mit Klinken als Mitnahmekupplung sind in der CH-PS 473 253 und der FR-PS 1 201 358 dargestellt und beschrieben. Anstelle von Klinken können auch radial bewegliche und gesteuerte, in eine Nut der Antriebswelle einrastende Mitnehmerkeile Anwendung finden. Beispiele solcher Mitnahmekupplungen sind in der DE-PS 1 410 729, der DE-PS 1 535 258 und in der DE-OS 30 01 310 zu finden. Bei allen vorgenannten Kupplungen sind verschiedenartige, vorzugsweise von Musterkarten gesteuerte Antriebsmechanismen anbaubar. Spezielle Probleme in bezug auf diese Kupplungen bestehen einerseits darin, dass die Klinken in eingerastetem Zustand ihre Stellung starr beibehalten, und dass die Steuerung der beiden Klinken aufeinander abgestimmt ist.

Bei sämtlichen der vorgenannten Rotations-Schaftmaschinen rotiert die Antriebswelle intermittierend um je 180°. Es ist üblich, die Steuerung der Kupplung in jene Phase zu verlegen, während welcher die Antriebswelle still steht, wobei diese Stillstandsphase bei hochtourig laufenden Webmaschinen verhältnismässig kurz bemessen bzw. zeitlich eingeschränkt ist. Dabei ergab sich bei der Entwicklung hochtouriger Rotations-Schaftmaschinen das Problem, die Steuerung in dieser eingeschränkten Zeit durchzuführen oder die Kupplung derart auszubilden, dass die effektive Dauer für die Steuerung – d.h. sowohl das Ablesen der Musterkarte, als auch die Impulsgebung und das sichere Verstellen der Kupplungsorgane – ausgedehnt wird ohne die Arbeitsgeschwindigkeit der angeschlossenen Webmaschinen einzuschränken.

Als nachteilig hat sich erwiesen, dass Steuermechanismen, deren wesentliche Steuerfunktion durch eine Feder ausgeübt wird, bezüglich gleichbleibendem zeitlichem Steuerablauf einen Unsicherheitsfaktor darstellen und langfristig gesehen unzuverlässig sind, was bei mechanischen Steuermechanismen, d.h. ohne Feder, nicht der Fall ist. Bei Vorspannen vorgesteuerter Federn ist zudem durch den Steuerapparat eine erhebliche Reservekraft aufzubringen, was eine robustere Bauart des Steuerapparates bedingt. Entscheidend ist schlussendlich, dass die Dicke der Kupplungselemente von der durch die Webschaftteilung bedingten Breite abhängt.

Für den Kupplungsvorgang wesentlich ist ferner das sichere Einrasten der Klinke in die Nut der Antriebswelle. Für den Einrastvorgang werden die Organe vorteilhafterweise mit einem Anzugwinkel versehen. Nachteilig ist dabei, dass bei grosser Belastung auf Keil oder Klinke, z.B. schnellem Anlauf bei intermittierendem Betrieb, der Anzugswinkel das Herausdrücken der Kupplungsteile fördert. In der DE-OS 30 01 310 ist beispielsweise ein innerhalb der gegebenen Verhältnisse feingliedrig gestaltetes und aus diesem Grunde die geforderte Funktionssicherheit nicht gewährleistetes Sperrsystem gezeigt.

Eine weitere an eine neuzeitliche Maschine gestellte Bedingung ist eine universell verwendbare, d.h. eine sowohl bei Vorwärts- als auch bei Rückwärtslauf der Maschine arbeitende Kupplung. Bei Schaftmaschinen muss die Möglichkeit des Zurückdrehens der Welle bzw. das Zurückweben zum Schuss-Suchen gewährleistet sein.

Ziel der Erfindung ist eine in beiden Drehrichtungen arbeitende Mitnahmekupplung für Rotations-Schaftmaschinen, deren Vorsteuerung ohne die Hilfsmittel einer Feder auskommt, ein spielfreies Kuppeln ermöglicht und in gekuppeltem Zustand eine Selbstsperre aufweist. Zudem soll diese Kupplung innerhalb der Schaftteilung einer Webmaschine einbaubar sein und bei hoher Tourenzahl fehlerfrei arbeiten.

Dies wird mit einer eingangs genannten, die Merkmale des kennzeichnenden Teils des Patentanspruches 1 aufweisenden Rotations-Schaftmaschine erreicht.

Das Verbinden der beiden spiegelbildlich angeordneten Klinken über ein Kniehebelsystem ermöglicht einerseits ein gestaffeltes oder gleichzeitiges Steuern und Einrasten sowie anderseits eine Selbstsperrung in gekuppeltem Zustand, wobei die beiden Laschen und das Gelenk in einer Geraden, d.h. in der gestreckten Totpunktlage, liegen. Bei gestaffeltem Steuern und Einrasten ist eine Vorsteuerung möglich.

Zur Steuerung und Schaltung der Kupplung bzw. des Kniegelenkes dient ein annähernd konzentrisch um die Antriebswelle angeordneter, von den Ableseorganen der Musterkarte hin- und hergeschwenkter Schaltarm. Solche, eine ringartige Erweiterung aufweisende Schaltarme sind durch die CH-PS 512 605, die CH-PS 517 192 und die EP-Anmeldung 84 106 255 bekannt geworden und weisen ringsumlaufende, mit der Schwenkachse des Kniegelenkes in Verbindung stehende Kragen oder Nuten auf.

Zur Blockierung der Exzenterscheibe bei ausgerasteten Klinken wird ein Teil der Schwenkachse des Kniegelenkes in eine ortsfeste Fangöffnung eingeschoben, welche vorzugsweise von je zwei Enden zweier halbkreisförmig um die Exzenterscheibe angeordneter, auf der Kurbelstange sitzender Leitschienen gebildet ist. Diese können federnd ausgebildet sein und das Kniegelenk bei seiner Schwenkbewegung mit den eingerasteten Klinken und der Exzenterscheibe zusätzlich sichern.

In der Zeichnung ist ein Ausführungsbeispiel der Erfindung dargestellt. Es zeigen

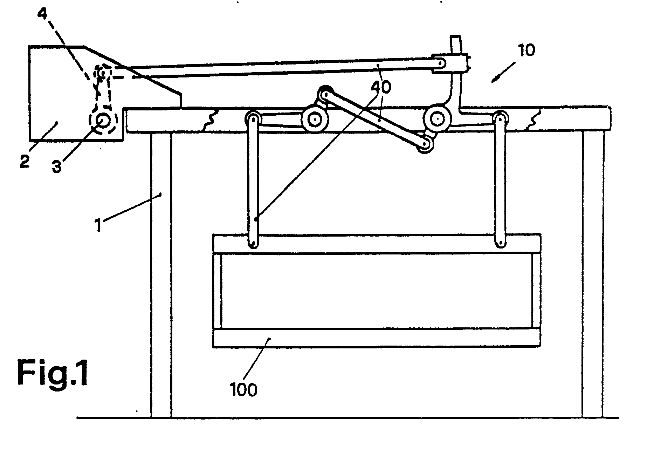

Fig. 1 schematisch eine auf dem Prinzip des Rotationsantriebes arbeitende Hubeinheit einer an eine Webmaschine angeschlossenen Schaftmaschine,

Fig. 2 eine Draufsicht auf eine erfindungsgemässe Rotations-Hubeinheit in eingekuppeltem Zustand,

Fig. 3 einen Schnitt nach der Linie III–III in Figur 2;

Fig. 4 einen Schnitt nach der Linie IV–IV in Figur 2,

Fig. 5 eine Draufsicht gemäss Fig. 2 auf die Hubeinheit, in ausgekuppeltem Zustand,

Fig. 6 dieselbe Ansicht der Hubeinheit in einer Lage zwischen Ein- und Auskuppeln,

Fig. 7 einen Längsschnitt durch das Kniehebelgelenk in gestreckter Lage, und

Fig. 8 eine der Fig. 2 identische Darstellung einer Variante der Rotations-Hubeinheit.

Am Gestell 1 der Webmaschine 10 ist die Schaftmaschine 2 befestigt, auf deren Antriebswelle 3, über einen nichtgezeichneten Exzenterring, die Kurbelstange 4 sitzt, von der, über das Gestänge 40, die Bewegung auf die Schäfte 100 übertragen wird.

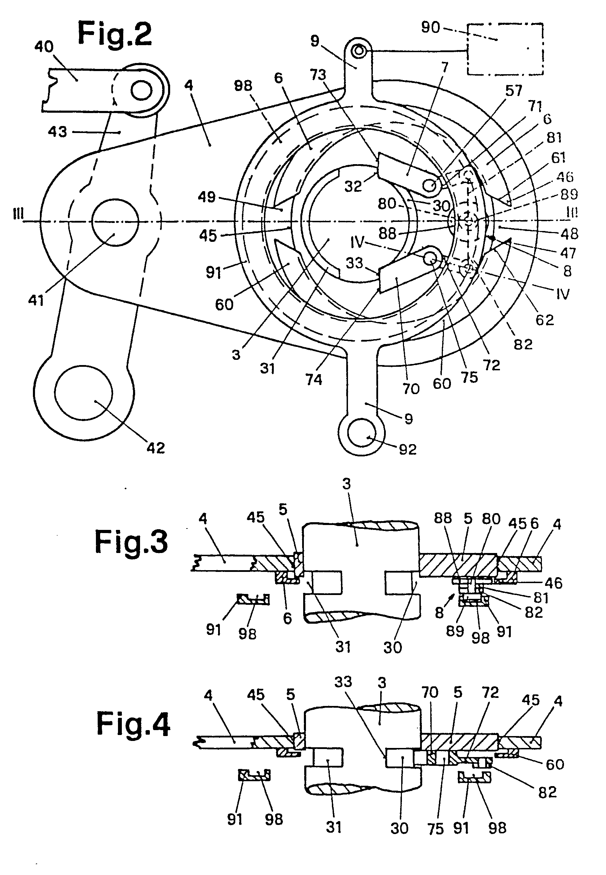

In den Fig. 2 bis 8 sind sämtliche, für die erfindungsgemässe Funktion der Schaftmaschine unwesentlichen Teile nicht dargestellt.

Zwischen der intermittierend rotierenden Antriebswelle 3 mit zwei diametral zueinander angeordneten Längsnuten 30 und 31 der Kurbelstange 4, sitzt in der Bohrung 45 der Kurbelstange, frei rotierbar, jedoch axial nicht verschiebbar, der Exzenterring 5.

Die Bewegung der Kurbelstange wird, über den Bolzen 41, auf den auf dem ortsfesten Zapfen 42 gelagerten Antriebsarm 43 und von dort, über das Gestänge 40, auf den Schaft der Webmaschine übertragen.

Auf den beiden Stiften 57, 75 sitzen schwenkbar die beiden Klinken 7, 70, welche durch ihre beiden Armfortsätze 71, 72 als zweiarmiger Hebel ausgebildet sind. Je nach Steuerung greifen die freien Enden 73, 74 der Klinken in die Nuten 30 bzw. 31 der Antriebswelle 3 ein. An jedem Armfortsatz 71, 72 der Klinken 7, 70 ist je eine Lasche 81, 82 eines Kniehebelgelenkes 8 angelenkt, welche Laschen über die gemeinsame, die Schwenkachse des Kniehebelgelenkes bildende Schwenkachse 80 verbunden sind.

Zur Steuerung der Kupplung bzw. des Kniehebelgelenkes dient ein auf einem gehäusefesten Bolzen 92, in einer radialen Ebene zur Antriebswelle 3 schwenkbar sitzender Schaltarm 9, dessen Bewegung von einem bekannten, mit einer Musterkarte versehenen Steuerwerk 90 ausgelöst wird. In seinem Mittelbereich weist der Schaltarm 9 eine ringförmige Erweiterung 91 auf, durch welche die Antriebswelle 3 der Schaftmaschine annähernd zentrisch hindurchführt. Der Ring 91 des Schaltarms 9 ist mit einer mit der Schwenkachse 80 des Kniehebelgelenkes 8 in Wirkverbindung stehenden, ringsumlaufenden, die Mitnahmekupplung steuernden Führungsnut 98, auch Steuerkurve genannt, oder einem ringsumlaufenden Kragen (s. DE-PS 2 036 644) versehen. Im Ausführungsbeispiel sitzt auf der Schwenkachse 80 als Gleitteil eine in der Nut 98 gleitende Rolle 89.

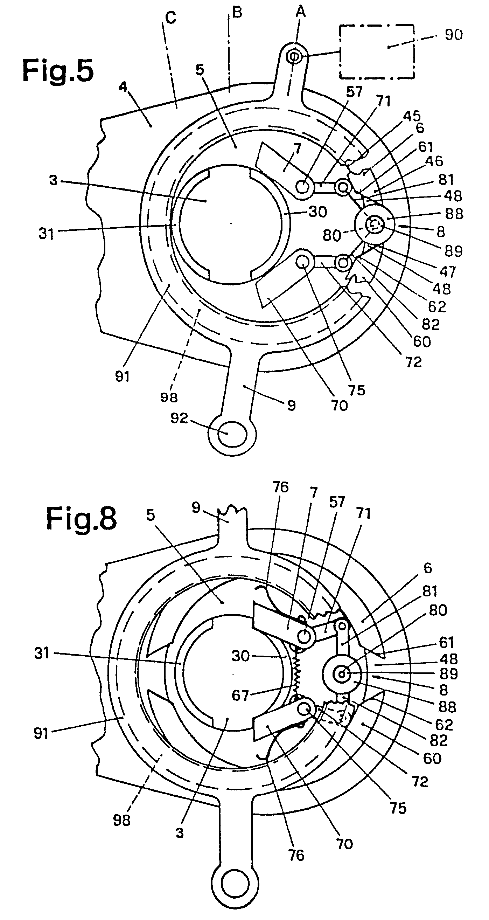

Ausgehend von der eingekuppelten Stellung der Mitnahmekupplung gemäss Fig. 2, d.h. der eingerasteten Klinken 7, 70 in der Nut 30 der Antriebswelle 3, wird im bzw. annähernd im Stillstand der Antriebswelle 3 der Schaltarm 9 nach rechts in die Stellung gemäss Fig. 5 verschwenkt. Die Schwenkachse 80 und damit das Gelenk des Kniehebelgelenkes 8 werden radial nach aussen in die durch zwei Blöcke 46, 47 gebildete Fangöffnung 48 verschoben, was ein Einknicken des Kniehebelgelenkes zu Folge hat. Über die beiden Laschen 81, 82 des Kniehebelgelenkes werden die beiden Armfortsätze 71, 72 gegeneinander gezogen und die eigentlichen Klinken 7, 70 nach aussen aus der Nut 30 herausgeschwenkt (Stellung gemäss Fig. 5). Auf der Schwenkachse 80 sitzt eine Scheibe 88, die dem Fangen des Kniehebelgelenkes 8 in der Fangöffnung 48 dient. Die Antriebswelle 3 rotiert ohne Mitnahme des Exzenterringes 5. Das Kniehebelgelenk bleibt in der Auffangöffnung gefangen. Kniehebelgelenk, Klinke und Exzenterring verbleiben im Stillstand.

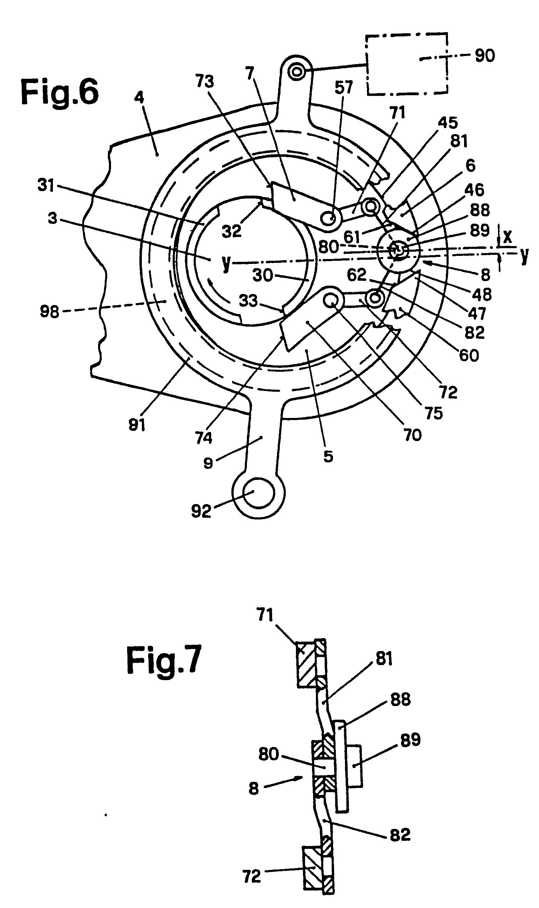

Soll nun durch einen Impuls der Musterkarte über das Steuerwerk 90 ein Stellungswechsel des Schaftes erfolgen, schwenkt der Schaltarm 9 kurz vor Erreichen des Stillstandes der Antriebswelle aus der Stellung A in Fig. 5 in die Stellung B und nimmt mit seiner Führungsnut 98, über die Rolle 89, die Schwenkachse 80 mit in die Stellung gemäss Fig. 6. Da sich die Nut 30 bereits im Bereich der Klinken befindet, kann die obere Klinke 7 in die Nut einrasten, während die untere Klinke 70 noch auf der Antriebswelle 3 aufliegt. Um diese asymmetrische Stellung einzunehmen, bewegt sich die Schwenkachse 80 um die Distanz x aus der Symmetrieachse y heraus. Bei der Weiterrotation der Antriebswelle wird die Klinke 7 vom Rand 32 der Nut 30 mitgenommen. Gleichzeitig rastet die Klinke 70 in die Nut 30 ein und verhindert ein Spiel der Kupplung. Mit dem Erreichen dieser Stellung kann der Schaltarm 9 in die der Stellung gemäss Fig. 2 entsprechende Stellung schwenken (Fig. 5). Die beiden Laschen 81, 82 gelangen mit dem Kniehebelgelenk in eine gestreckte Lage d.h. sie bilden eine Gerade und dadurch eine Sperre gegen das Einknicken des Kniehebelgelenkes. Der Exzenterring 5 wird von den Klinken 7, 70 über ihre Lagerstifte 57, 75 mitgenommen. Die Schwenkachse 80 bzw. die Rolle 89 gleitet in der Führungsnut 98 und das Ganze schwenkt um 180°, bis zum nächsten Stillstand der Antriebswelle 3 bzw. bis zur nächsten Steuerung des Schaltarms 9. Der Schaft 100 der Webmaschine 1 wird über die Kurbelstange 4 und das Gestänge 40 bewegt.

Zum Entriegeln der Kupplung schwenkt nun der Schaltarm 9 im bzw. annähernd im Stillstand der Antriebswelle 3, unter Mitnahme des Kniehebelgelenkes 8, aus der Stellung B in die Stellung C. Die Selbstsperre des Kniehebelgelenkes wird aufgelöst.

Die beschriebenen Schaltungen mit der Schwenkung des Schaltarmes 9 in drei Stellungen, können sowohl im Bereich der rechten als auch im Bereich der linken Fangöffnung 48, 49 erfolgen; im Bereich der rechten Fangöffnung 48 von der Stellung A über B in die Stellung C und im Bereich der linken Fangöffnung 49 von der Stellung C über B in die Stellung A.

Sowohl die freien Enden 73, 74 der Klinken 7, 70, als auch die Ränder 32, 33 der Nuten 30, 31 der Antriebswelle 3 sind so ausgebildet, dass sie bei eingerasteter Mitnahmekupplung eine annähernd parallel zur Verbindungslinie der beiden Schwenkpunkte der Klinken verlaufende Linie bilden, wobei die Klinken annähernd tangential zur Aussenfläche der Antriebswelle liegen. Dadurch erfolgt ein problemloses Einrasten der Klinken, welche beim Anlauf der Antriebswelle mit hoher Geschwindigkeit und dem damit zusammenhängenden Flankendruck auf die Rastflächen 73, 74 nicht herausgedrückt, d.h. die Einrastflächen der Klinkenenden 73, 74 und der Nuträder 32, 33 befinden sich im Bereich der Selbsthemmung durch Reibung.

Fig. 8 zeigt eine Doppelvariante einer erfindungsgemässen Rotations-Hubeinheit. Die Klinken 7, 70 befinden sich im eingerasteten Zustand, d.h. der Exzenterring wird eine Rotationsbewegung um 180° ausführen. Sämtliche Elemente stimmen mit denjenigen der Fig. 2 überein. Zusätzlich sind als Ergänzung zwei Federvarianten angeordnet, und zwar eine die beiden Klinken 7, 70 im Sinne des Einschwenkens bzw. des Einrastens gegeneinanderziehende Zugfeder 67 oder als Alternative zwei je an einer Klinke 7, 70 befestigte Lamellenfedern 76 mit in den Raum zwischen Antriebswelle und Schaltring reichendem Ende, welche Enden in eingerastetem Zustand der Klinken einen geringen Abstand zum Innenumfang des Schaltringes 91 aufweisen, so dass während der Rotation des Exzenterringes 5 mit den Klinken 7, 70 und der Antriebswelle 3 keine Reibung auftritt. Stehen die Klinken in ausgerasteter Lage und ist das Kniegelenk 8 in eine Auffangöffnung 48, 49 eingefahren, d.h. die Exzenterscheibe ortsfest gehalten, stützen sich je die freien Enden der Lamellenfedern 76 am Innenumfang des Schaltringes 91 ab und unterstützen durch ihre Federwirkung die Einrastbewegung.

Es sei ausdrücklich darauf hingewiesen, dass die Federn 67, 76 nicht der Steuerung der Bewegung der Klinken 7, 70 und des Kniehebelgelenkes 71, 81, 80; 72, 82, 80 dienen, sondern lediglich deren Bewegung im Sinne einer gewissen Beschleunigung unterstützen.

Die die Fangöffnungen 48 bildenden Begrenzungsflächen 61, 62 können Teile von zwei bzw. vier Blöcken 46, 47 oder die Enden von je halbkreisförmig um die Bohrung 45 der Kurbelstange 4 für den Exzenterring 5 liegenden Leitschienen 6, 60 sein. Entlang diesen Leitschienen 6, 60 kann das Gelenk des Kniehebelgelenkes 8 gleiten, was einen zusätzlichen Sicherheitsfaktor gegen das Einknicken des sperrenden Kniehebelgelenkes darstellt, wobei die diesem Gleiten dienende Scheibe 88 der Schwenkachse 80 auch ein Nokken der Schwenkachse selbst oder einer Lasche sein kann. Die Eintrittsbreite ddr Fangöffnungen 48, 49, welche statt an der Kurbelstange auch am Maschinengehäuse angeordnet sein können, muss grösser als der grösste Durchmesser des Gelenkes des Kniehebelgelenkes, z.B. grösser als der Durchmesser der Scheibe 88 sein. Damit ist ein trichterförmiges Einfangen des Kniegelenkes durch die Fangöffnungen gewährleistet. Durch die bereits beschriebene zeitweilige asymmetrische Stellung der Schwenkachse 80 zur Fangöffnung 48, 49 ergibt sich vorerst ein kontrollierbarer Steuerweg und eine spielfreie Halterung.

Klinken 7, 70, Kniehebelgelenke 8 und Fangöffnungen 48, 49, liegen vorzugsweise symmetrisch zur radial verlaufenden Mittellinie y der Kurbelstange 4.

Anstelle der Kurbelstange 4 kann für die Übertragung der Bewegung des Exzenterringes 5 über das Gestänge 40 an den Schaft 100 ein Rollenhebel angeordnet sein, welcher aus einem auf einer ortsfesten Achse angeordneten Kipphebel bestehen kann, der einerseits über eine Walze auf dem Umfang des Exzenterringes aufliegt und anderseits mit dem Gestänge verbunden ist. Bei der Rotation des Exzenterringes wird der Schaft, vom Kipphebel gesteuert, auf- und abbewegt. Dabei sind die die Fangöffnungen 48, 49 bildenden Blöcke 46, 47 bzw. die Leitschienen 6, 60 am Gehäuse oder am Gestell der Schaftmaschine 2 befestigt.

Die beschriebene Mitnahmekupplung ermöglicht eine Vorsteuerung der eigentlichen Kupplung mit einem gesteuerten Zwangseinrasten im Moment des Stillstandes der Antriebswelle. Es finden keine federgesteuerten Vorgänge statt und die einzelnen Bauteile unterliegen keiner Abnützung durch Reibung. Trotzdem arbeitet die Kupplung mit einer einfachen Selbstsperrung in gekuppelter Stellung sicher und schnell.

**Patentansprüche**

1. Mitnahmekupplung zwischen einer Antriebswelle und einem auf ihr frei drehbar gelagerten Exzenterring einer Rotations-Schaftmaschine, zur Steuerung der Schäfte einer Webmaschine, wobei auf dem Exzenterring, ebenfalls frei drehbar, eine Kurbelstange sitzt und die Kupplung ein steuerndes Schaltorgan sowie zwei auf die gleiche Nut der Antriebswelle wirkende, je auf dem Exzenterring schwenkbar gelagerte Klinken aufweist, wobei die eine Klinke der Mitnahme des Exzenterringes und die andere dem Zurückhalten des Exzenterringes bzw. der Spielfreihaltung der Mitnehmerklinke in der Nut der Antriebswelle dient, dadurch gekennzeichnet, dass an jeder Klinke (7, 70) je eine Lasche (81, 82) eines Kniehebelgelenkes (8) angelenkt ist, wobei die Schwenkachse (80) des Kniehebelgelenkes (8) gleitbar in einer Steuerkurve (98) eines an sich bekannten Schaltarms (9) geführt ist, und dass einerseits zur Sicherung gegen das Mitrotieren der Klinken (7, 70) mit dem Exzenterring (5), im ausgerasteten Zustand derselben, zwei einander diametral gegenüberliegende, ortsfest angeordnete Fangöffnungen (48) für die sich in ausgeknickter Lage befindliche Schwenkachse (80) des Kniehebelgelenkes (8) angeordnet sind und anderseits die Laschen (81, 82) des Kniehebelgelenkes im gestreckten Zustand der Blockierung der in eine Nut (30, 31) der Antriebswelle (3) eingerasteten Klinken (7, 70) dienen.

2. Mitnahmekupplung einer Rotations-Schaftmaschine nach Anspruch 1, dadurch gekennzeichnet, dass der Schaltarm (9) ein zur Antriebswelle (3) annähernd konzentrischer, in einer radialen Ebene zu dieser hin- und herschwenkbarer Schaltring (91) mit Steuerkurve (98) ist.

3. Mitnahmekupplung einer Rotations-Schaftmaschine nach Anspruch 1 oder 2, dadurch gekennzeichnet, dass die beiden Klinken je als zweiarmige, im Scheitelpunkt schwenkbar gelagerte Hebel ausgebildet sind, dass je der eine Arm als Klinken-Eingriffsteil (7, 70) in die Nuten (30, 31) der Antriebswelle (3) ausgebildet ist, und dass je am anderen freien Arm (71, 72) je eine Lasche (81, 82) des Kniehebelgelenkes (8) derart angelenkt ist, dass die beiden Klinken (7, 70) beim Einknicken des Kniehebelgelenkes (8) von der Antriebswelle (3) wegschwenken.

4. Mitnahmekupplung einer Rotations-Schaftmaschine nach Anspruch 2 oder 3, dadurch gekennzeichnet, dass auf der Schwenkachse (80) des Kniehebelgelenkes (8) oder an einer Lasche (80, 81) ein in die Steuerkurve (98) des Schaltarms (9) eingreifender Gleitteil, z.B. eine Rolle (89), sitzt.

5. Mitnahmekupplung einer Rotations-Schaftmaschine nach einem der Ansprüche 1 bis 4, dadurch gekennzeichnet, dass sowohl je das Einrast-Ende der Klinken (7, 70) in eingerasteter Stellung, als auch die Endbegrenzungen der beiden Nuten (30, 31) der Antriebswelle (3) annähernd parallel zur Verbindungslinie der beiden Schwenkpunkte der Klinken (7, 70) verlaufen, wobei die Klinken annähernd tangential zur Aussenfläche der Antriebswelle (3) liegen.

6. Mitnahmekupplung einer Rotations-Schaftmaschine nach einem der Ansprüche 1 bis 5, dadurch gekennzeichnet, dass zwecks Förderung der Bewegung des Einrastens der Klinken (7, 70) eine sie verbindende Zugfeder (67) oder am Exzenterring je eine auf eine Klinke wirkende Feder, z.B. Blattfeder (76), angeordnet ist.

7. Mitnahmekupplung einer Rotations-Schaftmaschine nach einem der Ansprüche 1 bis 6, dadurch gekennzeichnet, dass an der Kurbelstange (4) oder am Maschinengehäuse zwei vorzugsweise symmetrisch zur durch die Axe der Antriebswelle (3) verlaufenden Mittellinie (y) der Kurbelstange (4) liegende Fangöffnungen (48, 49) angeordnet sind, in welche ein Fangteil (88) der Schwenkachse (80) des Kniehebelgelenkes (8) einrastbar und dort derart gehalten ist, dass der Exzenterring (5) der Rotationsbewegung der Antriebswelle (3) nicht folgt.

8. Mitnahmekupplung einer Rotations-Schaftmaschine nach Anspruch 7, dadurch gekennzeichnet, dass die sich gegen die Schwenkachse (80) des Kniehebelgelenkes (8) zu keilförmig öffnenden Begrenzungsflächen (61, 62) der Fangöffnungen (48) angeschrägt sind.

9. Mitnahmekupplung einer Rotations-Schaftmaschine nach Anspruch 8, dadurch gekennzeichnet, dass die Eintrittsbreite der Fangöffnung (48) grösser als der grösste Durchmesser des Fangteils (88) der Schwenkachse (80) des Kniehebelgelenkes (8) ist.

10. Mitnahmekupplung einer Rotations-Schaftmaschine nach Anspruch 8 oder 9, dadurch gekennzeichnet, dass die die Begrenzungsflächen (61, 62) der Fangöffnungen (48, 49) bildenden Körper federnd gelagert sind.

11. Mitnahmekupplung einer Rotations-Schaftmaschine nach einem der Ansprüche 7 bis 10, dadurch gekennzeichnet, dass die Begrenzungsflächen (61, 62) der Fangöffnungen (48, 49) bildenden Körper je das Ende einer Leitschiene (6, 60) sind, welche sich konzentrisch um den Rand der Lagerbohrung (45) der Kurbelstange (4) für den Exzenterring (5) und diesen teilweise am Rand überdeckend, mindestens über einen Teil des Bohrungsumfanges erstreckt.

12. Mitnahmekupplung einer Rotations-Schaftmaschine nach einem der Ansprüche 1 bis 11, dadurch gekennzeichnet, dass die beiden Klinken (7, 70), das Kniehebelgelenk (8) und die Fangöffnungen (48, 49) symmetrisch zur radial durch das Zentrum der Antriebswelle verlaufenden Mittellinie (y) der Kurbelstange (4) angeordnet sind.

**Revendications**

1. Accouplement d'entraînement entre l'arbre de commande et la bague d'excentrique montée de façon librement rotative sur celui-ci d'une machine d'armure rotative, destiné à la commande des lisserons ou lisses d'un métier automatique à tisser, une bielle motrice, également librement rotative, étant montée sur la bague d'excentrique et l'accouplement présentant un organe de manœuvre ainsi que deux tocs agissant sur la même rainure de l'arbre d'entraînement, montés chacun de façon basculante sur la bague d'excentrique, un des tocs servant à l'entraînement de la bague d'excentrique et l'autre toc servant à retenir la bague d'excentrique ou à maintenir le toc d'entraînement sans jeu mécanique dans la rainure de l'arbre de commande, caractérisé en ce que sur chaque toc (7, 70) est respectivement articulée une attache (81, 82) d'une articulation de genouillère (8) l'axe basculant (80) de l'articulation de genouillère (8) étant mené de façon coulissante dans une came de commande (98) d'un bras de manœuvre (9) connu en soi, et en ce que d'une part, pour empêcher la rotation des tocs (7, 70) simultanément avec la bague d'excentrique (5), à l'état von encliqueté de ceux-ci, sont disposées deux ouvertures de retenue (48, 49), fixées à demeure de façon diamétralement opposée entre elles, pour l'axe de basculement (80) se trouvant dans la position fléchie de l'articulation de genouillère (8) et d'autre part, les attaches (81, 82) de l'articulation de genouillère dans la position d'extension servent au blocage des tocs (7, 70) encliquetées dans une rainure (30, 31) de l'arbre de commande (3).

2. Accouplement d'entraînement d'une machine d'armure rotative selon la revendication 1, caractérisé en ce que le bras de manœuvre (9)comprend une bague de manœuvre (91) à came de commande (98), cette bague étant approximativement concentrique à l'arbre de commande (3) et basculant en va-et-vient dans un plan radial par rapport à cet arbre.

3. Accouplement d'entraînement d'une machine d'armure rotative selon la revendication 1 ou 2, caractérisé en ce que les deux tocs sont chacun conçus sous forme d'un levier à deux bras, et montés de façon basculante au sommet, en ce que chaque bras respectif est conçu sous forme de pièce d'attaque des tocs (7, 70) dans les rainures (30, 31) de l'arbre de commande (3), et en ce que sur l'autre bras respectivement libre (71, 72) est respectivement articulée une attache (81, 82) de l'articulation de genouillère (8) de manière à permettre aux deux tocs (7, 70) lors de l'inflexion de l'articulation de genouillère (8) de s'éloigner de l'arbre de commande (3) par basculement.

4. Accouplement d'entraînement d'une machine d'armure rotative selon la revendication 2 ou 3, caractérisé en ce qu'une pièce de glissement, par exemple un rouleau (89) attaquant la came de commande (98) du bras de manœuvre (9) est fixé sur l'axe de basculement (80) de l'articulation de genouillère (8) ou sur une attache (80, 81).

5. Accouplement d'entraînement d'une machine d'armure rotative selon l'une des revendications 1 à 4, caractérisé en ce qu'aussi bien l'extrémité d'encliquetage respective des tocs (7, 70) en position encliquetée, que les limitations d'extrémités des deux rainures (30, 31) de l'arbre de commande (3) s'étendent de façon approximativement parallèle à la ligne de liaison des deux points basculants des tocs (7, 70), les tocs se situant de façon approximativement tangentielle à la surface extérieure de l'arbre d'entraînement (3).

6. Accouplement d'entraînement d'une machine d'armure rotative selon l'une quelconque des revendications 1 à 5, caractérisé en ce que pour favoriser le mouvement d'encliquetage des tocs (7, 70), est agencé un ressort de traction (67) les reliant, ou sur la bague d'excentrique est respectivement agencé un ressort, par exemple un ressort à lame (76) agissant sur un toc.

7. Accouplement d'entraînement d'une machine d'armure rotative selon l'une quelconque des revendications 1 à 6, caractérisé en ce que sur la bielle motrice (4) ou sur le carter de la machine sont disposées deux ouvertures de retenue (48, 49) de préférence symétriquement par rapport à la ligne médiane (y) de la bielle motrice (4) s'étendant à travers l'axe de l'arbre de commande (3), dans lesquelles une pièce d'arrêt (88) de l'axe basculant (80) de l'articulation de genouillère (8) peut s'y encliqueter et y être fixée de façon que la bague d'excentrique (5) ne puisse accompagner le mouvement de rotation de l'arbre de commande (3).

8. Accouplement d'entraînement d'une machine d'armure rotative selon la revendication 7, caractérisé en ce que les surfaces de délimitation (61, 62) des ouvertures de retenue (48) s'ouvrant trapézoïdalement contre l'axe de basculement (80) de l'articulation de genouillère (8) sont biseautées.

9. Accouplement d'entraînement d'une machine d'armure rotative selon la revendication 8, caractérisé en ce que la largeur d'entrée de l'ouverture de retenue (48) est supérieure au plus grand diamètre de la pièce d'arrêt (88) de l'axe basculant (80) de l'articulation de genouillère (8).

10. Accouplement d'entraînement d'une machine d'armure rotative selon la revendication 8 ou 9, caractérisé en ce que les corps formant les surfaces de délimitation (61, 62) des ouvertures de retenue (48, 49) sont montés sur ressort.

11. Accouplement d'entraînement d'une machine d'armure rotative selon l'une des revendications 7 à 10, caractérisé en ce que les corps formant les surfaces de délimitation (61, 62) des ouvertures de retenue (48, 49) constituent respectivement l'extrémité d'une glissière (6, 60), laquelle s'étend concentriquement sur le bord de l'alésage du palier (45) de la bielle motrice (4) pour la bague d'excentrique (5) et recouvre partiellement celle-ci sur le bord, pour le moins sur une partie de la périphérie de l'alésage.

12. Accouplement d'entraînement d'une machine d'armure rotative selon l'une quelconque des revendications 1 à 11, caractérisé en ce que les deux tocs (7, 70), l'articulation de genouillère (8) et les ouvertures de retenue (48, 49) sont agencés symétriquement par rapport à la ligne médiane (y) de la bielle motrice (4) s'étendant radialement par le centre de l'arbre de commande.

## Claims

1. Entrainment coupling rotary dobby for the control of the heddles of a loom, between a drive shaft and an eccentric ring freely rotatably mounted thereon, wherein a connecting rod is located on the eccentric ring, likewise freely rotatably, and the coupling comprises a controlled switching member as well as two pawls acting upon the same groove of the drive shaft and each swingably mounted on the eccentric ring, whereby one pawl serves for the entrainment of the eccentric ring and the other serves for holding back the eccentring ring and for the play-free retention of the entraining pawl in the groove of the drive shaft, characterised in that respective plates (81, 82) of a toggle linkage (8) are each pivotably coupled to a corresponding pawl, the pivotal axis (80) of the toggle lever linkage (8) being slidably guided in a control cam (98) of a switching arm (9) known per se, and that on the one hand, for securing the pawls (7, 70) against rotation with the eccentric ring (5), in the disengaged condition thereof, there are provided two catch openings (48), arranged in fixed positions and lying diametrically opposite one another, for receiving the swivel axle (80) of the toggle lever linkage (8) in the bent-out position, and, on the other hand, the plates (81, 82) of the toggle linkage serve, when in the extended position, for the blocking of the pawls (7,70) engaged in a groove (30, 31) of the drive shaft (3).

2. An entrainment coupling of a rotary dobby according to Claim 1, characterised in that the switching arm (9) is a switching ring (91), with control cam (98), approximately concentric to the drive shaft (3) and swingable to and from in a plane radial to the latter.

3. Entrainment coupling of a rotary dobby according to Claim 1 or 2, characterised in that the two pawls are formed each as two armed lever swingably mounted at the vertex of the arms, that one arm of each is formed as a pawl part (7, 70) for engagement in the grooves (30,31) of the drive shaft (3), and that at other free arm (71, 72) of each a corresponding plate (81, 82) of the toggle linkage (8) is so linked that the two pawls (7, 70) swing away from the drive shaft (3) during bending of the toggle linkage (8).

4. Entrainment coupling of a rotary dobby according to Claim 2 or 3, characterised in that a sliding part, for example a roller (89), which engages in the control cam (98) of the switching arm (9) is provided on the swivel axis (80) of the toggle linkage (8) or on a plate (80, 81).

5. Entrainment coupling of a rotary dobby according to one of Claims 1 to 4, characterised in that both engagement ends of the pawls (7, 70) in the engaged position, and also the end walls of the two grooves (30, 31) of the drive shaft (3), extend approximately parallel to the line connecting the two swivel points of the pawls (7, 70), the pawls lying approximately tangential to the outer surface of the drive shaft (3).

6. Entrainment coupling of a rotary dobby according to one of Claims 1 to 5, characterised in that for assisting movement for the engagement of the pawls (7, 70) there is provided a tension spring (67 connecting the latter or a spring, for example a blade spring (76), arranged on the eccentric ring and acting upon each pawl.

7. Entrainment coupling of a rotary dobby according to one of Claims 1 to 6, characterised in that two catch openings (48, 49), preferably lying symmetrical to the centre line (Y) of the connecting rod (4) running through the axis of the drive shaft (3), are arranged on the connecting rod (4) or on the machine housing, in which catching part (88) of the swivel axle (80) of the toggle linkage (8) is engageable and is held there in such a manner that the eccentric ring (5) does not follow the rotational movement of the drive shaft (3).

8. Entrainment coupling of a rotary dobby according to Claim 7, characterised in that the boundary services (61, 62) of the catch openings (48) are inclined and open in the form a wedge towards the swivel axle (80) of the toggle linkage (8).

9. Entrainment coupling of a rotary dobby according to Claim 8, characterised in that the entry width of the catch opening (48) is larger than the largest diameter of the catch part (88) of the swivel axle (80) of the toggle linkage (8).

10. Entrainment coupling of a rotary dobby according to Claim 8 or 9 characterised in that the members forming the boundary surfaces (61, 62) of the catch openings (48, 49) are resiliently mounted.

11. Entrainment coupling of a rotary dobby according to one of Claims 7 to 10 characterised in that the members forming the boundary surfaces (61, 62) of the catch openings (48, 49) are each at the end of a guide rail (6, 60) which extends concentrically around the edge of the bearing opening (45) of the connecting rod (4) for the eccentric ring (5) and partially covers the same at the edge, at least over a part of the circumference of the opening.

12. Entrainment coupling of a rotary dobby according to one of Claims 1 to 11, characterised in that the two pawls (7, 70), the toggle linkage (8) and the catch openings (48, 49) are arranged symmetrically with respect to the centre line (Y) of the connecting rod running radially through the centre of the drive shaft.

1/4

Fig.1

2|4

**Fig.2**

40
43
4
98
6
73
9
90
7
57
71
6
81
61
46
89
32
80
30
49
45
91
60
3
31
74
70
60
75
72
82
62
41
42
88
IV
48
47
8
IV
III
III
9
92

**Fig.3**

4
45
5
3
88
5
80
45
6
4
46
81
82
91
98
6
31
30
8
89
98
91

**Fig.4**

4
45
5
33
3
70
5
72
45
4
60
82
91
98
31
30
75
91
98

3/4

**Fig.5**

**Fig.8**

4/4

**Fig.6**

**Fig.7**

15